(19) Europäisches Patentamt

European Patent Office

Office européen des brevets

(11) **EP 1 528 370 A2**

(12) **EUROPÄISCHE PATENTANMELDUNG**

(43) Veröffentlichungstag:
    **04.05.2005 Patentblatt 2005/18**

(51) Int Cl.⁷: **G01D 18/00**

(21) Anmeldenummer: **04023463.5**

(22) Anmeldetag: **01.10.2004**

(84) Benannte Vertragsstaaten:
    **AT BE BG CH CY CZ DE DK EE ES FI FR GB GR
    HU IE IT LI LU MC NL PL PT RO SE SI SK TR**
    Benannte Erstreckungsstaaten:
    **AL HR LT LV MK**

(30) Priorität: **31.10.2003 DE 10351313**

(71) Anmelder: **ABB PATENT GmbH
    68526 Ladenburg (DE)**

(72) Erfinder: **Lesjak, Ralf, Dipl.-Ing.
    37124 Rosdorf (DE)**

(74) Vertreter: **Miller, Toivo et al
    ABB Patent GmbH
    Postfach 1140
    68520 Ladenburg (DE)**

(54) **Verfahren zur Nullpunktkorrektur eines Messgerätes**

(57)    Verfahren zur Nullpunktskorrektur eines Messgerätes, insbesondere eines Durchflussmessgerätes, dadurch gekennzeichnet, dass

-    mehrere Nullpunktseinstellungen bei verschiedenen Geräte- und/oder Prozesszuständen durchgeführt werden,
-    bei jeder dieser Nullpunktseinstellungen zusammen mit dem Null-Messwert ein Geräte- und/oder Systemparametersatz erfasst und in einem elektronischen Speicher abgelegt werden, und

im Normalbetrieb des Messgerätes zu den jeweils aktuellen System- und/oder Geräteparametern ein passender gespeicherter Geräte- und/oder Systemparametersatz gesucht wird, so dass der diesem Parametersatz zugeordnete Null-Messwert als aktueller Nullpunktswert verwendet wird.

EP 1 528 370 A2

**Beschreibung**

Die Erfindung betrifft ein Verfahren zur Nullpunktskorrektur eines Messgerätes, insbesondere eines Durchflussmesser wie beispielsweise eines Massedurchflussmesser nach dem Coriolis Prinzip.

Ein bekanntes Verfahren zur Nullpunktskorrektur ist, dass die Durchflussanzeige des in die Anlage eingebauten und mit ruhendem Medium gefüllten Gerätes durch einen Systemnullpunktabgleich zu Null gesetzt wird.

Bei diesem Abgleich wird die momentane, d.h. bei mit ruhendem Medium gefüllte, Durchflussanzeige gespeichert und in Zukunft von dem aktuellen Messwert, der dann bei strömendem Medium ermittelt wird, abgezogen. Dadurch soll gewährleistet sein, dass das Gerät unter den jeweils momentan vorherrschenden Umgebungsbedingungen und Installationsbedingungen bei stehendem Medium möglichst keinen Durchfluss anzeigt.

Der Systemnullpunkt eines Durchflussmessgerätes ist je nach physikalischem Messprinzip von verschiednen Prozessbedingungen abhängig.

Installationsbedingungen:

- Mechanische Momente und Kräfte
- Druckverhältnisse
- mechanische Störungen
- hydraulische Störungen
- elektromagnetische Störungen

Umgebungsbedingungen:

- Mediumsdruck im Messaufnehmer
- Umgebungstemperatur
- Mediumstemperatur

- Viskosität des Mediums
- Leitfähigkeit des Mediums
- Dämpfungseigenschaften des Mediums
- Gasanteile im Medium

Ändert sich ein oder mehrere Parameter, so kann es zu einer Nullpunktverschiebung kommen, welche als zusätzliche Abweichung die Genauigkeit der Durchflussmessung verringert.

Eine Nullpunktabweichung wirkt sich zu kleineren Durchflüssen stärker aus, dieses lässt sich durch nachfolgende Formel beschreiben:

$$Q'=Q+NP$$

$$Abw = \left( \frac{Q + NP}{Q} - 1 \right) \bullet 100\,\%$$

mit

Q' : angezeigter Durchfluss
Q : wahrer Durchfluss
NP : Nullpunktoffset aufgrund geänderter Installations- bzw. Umgebungsbedingungen
Abw : zusätzliche prozentuale Abweichung der Durchflussanzeige aufgrund der Nullpunktabweichung

Ein Beispiel soll den Sachverhalt verdeutlichen:

Der momentane Durchfluss beträgt Q=100% des maximalen Durchflussbereiches Die Nullpunktverschiebung aufgrund von geänderten ProzessbedingungenNP=0,01 %

$$Abw = \left( \frac{Q + NP}{Q} - 1 \right) \bullet 100\% = \left( \frac{100\% + 0,01\%}{100\%} - 1 \right) \bullet 100\% = 0,01\%$$

Es ergibt sich somit eine zusätzliche Abweichung von +0,01%
Bei einem verringertem Durchfluss von 2% des maximalen Durchflussbereiches ergibt sich jedoch schon eine zusätzliche Abweichung von 0,5%.

$$Abw = \left( \frac{Q + NP}{Q} - 1 \right) \bullet 100\% = \left( \frac{2\% + 0,01\%}{100\%} - 1 \right) \bullet 100\% = 0,5\%$$

Die Aufgabe der vorliegenden Erfindung ist es, ein verbessertes Verfahren zur Nullpunktskorrektur anzugeben.
Die Aufgabe wird gelöst durch die kennzeichnenden Merkmale des Anspruchs 1.
Bei dem erfindungsgemäßen Verfahren werden bei mehreren verschiedenen Geräteund/oder Prozesszuständen Nullpunktseinstellungen durchgeführt. Bei jeder dieser Nullpunktseinstellungen wird zusammen mit dem Null-Messwert ein Geräte- und/oder Systemparametersatz erfasst und in einem elektronischen Speicher abgelegt.
Im Normalbetrieb des Messgerätes wird dann zu den jeweils aktuellen Systemund/oder Geräteparametern ein passender gespeicherter Geräte- und/oder Systemparametersatz gesucht, so dass der diesem Parametersatz zugeordnete Null-Messwert als aktueller Nullpunktswert verwendet wird. Wenn keiner der aktuellen Parametersätze genau zu einem der gespeicherten passt, so werden zu einem aktuellen Geräte- und/oder Systemparametersatz zwei im Speicher abgespeicherte nächstgelegene Geräte- und/oder Systemparametersätze gesucht und aus den diesen zugeordneten Null-Messwerten wird durch Interpolation der aktuelle Nullpunktswert ermittelt.
Die Nullpunktseinstellung nutzt die Möglichkeit, dass bei mehreren verschiedenen Betriebszuständen alle zur Verfügung stehenden Prozesswerte abgespeichert werden und bei Betriebszuständen zwischen diesen Werten eine interpolierte Nullpunktkorrektur erfolgt. D.h., die Nullpunktkorrektur ist lernfähig und umso besser, je mehr Nullpunktabgleiche vorgenommen werden.
Anhand eines Massendurchflussmessers nach dem Coriolisprinzip soll dieses verdeutlicht werden.
Das Gerät misst den Massenstrom, die Mediumsdichte und die Mediumstemperatur. Als interne Messgröße kann z. B. noch der Treiberstrom und die Gehäusetemperatur gemessen werden.
Bei jeder Durchführung einer Nullpunktseinstellung werden nun alle messtechnisch ermittelten Parameter in einer Matrix abgespeichert. Jedes mal, wenn der automatische Systemnullpunktabgleich durchgeführt wird, kommt ein neuer Datensatz hinzu, sodass sich die Datenmenge in dem Array erhöht. Ist das Array mit n Elementen gefüllt, so kann bei einem erneutem Systemnullpunktaufruf das letzte Element (mit den ältesten Daten) entfernt werden.
Befindet sich das Gerät exakt in einem Betriebszustand, welcher in dem Array abgespeichert ist, so kann direkt der zugehörige, abgespeicherte Systemnullpunkt zur Kompensation verwendet werden.
Ist dieses jedoch nicht der Fall (durchaus üblich im praktischem Betrieb) so ist der Korrekturwert mit Hilfe der Daten des Arrays zu ermitteln. Dieses kann auf verschiedene Art geschehen.

- Gewichtung der einzelnen Spalten nach Parametern mit anschließender Interpolation
- Fuzzy Logik
- Neuronales Netz

| Systemnullpunkt System Zero Adjust Z [%Messendwert] | Parameter 1 Mediumstemperatur Pipe Temperature Tp[°C] | Parameter 2 Gehäusetemperatur HousingTemperature Th[°C] | Parameter3 Dichte Density D [kg/dm3] | Parameter 4 Treiberstrom Drivercurrent Id[mA] | Parameter 6 Zeitstempel Timestamp [ms] |
|---|---|---|---|---|---|
| Z1 | Tp1 | Th1 | D1 | ID1 | t1 |

(fortgesetzt)

| Systemnullpunkt System Zero Adjust Z [%Messendwert] | Parameter 1 Mediumstemperatur Pipe Temperature Tp[°C] | Parameter 2 Gehäusetemperatur HousingTemperature Th[°C] | Parameter3 Dichte Density D [kg/dm3] | Parameter 4 Treiberstrom Drivercurrent Id[mA] | Parameter 6 Zeitstempel Timestamp [ms] |
|---|---|---|---|---|---|
| Z2 | Tp2 | Th2 | D2 | ID2 | t2 |
| Z3 | Tp3 | Th3 | D3 | ID3 | t3 |
| ... | ... | ... | ... | ... | ... |
| Zn | Tpn | Thn | Dn | Idn | tn |
| Weitere Parameter sind möglich (z.B. Kraft, Druck) | | | | | |

Zur Veranschaulichung ein Beispiel:

Zur Vereinfachung wird nur der Parameter 1 (Mediumstemperatur betrachtet) Wenn des Gerät in die Anlage eingebaut und mit Medium befüllt ist, muss ein Systemnullpunktabgleich durchgeführt werden. Der Systemnullpunktabgleich wird manuell gestartet und bewirkt, dass die Software den Nullpunkt über eine gewisse Zeit mittelt. Als Nullpunkt Z1 ergibt sich z.B. 0,01%

Als Medium befindet sich 4°C kaltes Wasser in der Leitung. Somit wird als Datensatz1 Z1=0,01% und TP1=4°Cwird abgespeichert. Wird jetzt z.B. die Mediumstemperatur auf 80°C geändert, so ergibt sich eine Nullpunktverschiebung auf 0,02%. D.h. das Gerät misst ohne erneuten Nullpunktsabgleich um einen Betrag von 0,01 % vom Endwert falsch.

Durch einen erneuten Systemnullpunktabgleich ergibt sich als abgespeicherten Datensatz Z2=0,02% und TP1=80°C.

In dem Betriebszustand mit 80°C warmen Wasser wird somit mit Z2 und in dem Betriebszustand mit 4°C warmen Wasser mit Z1 der Nullpunkt korrigiert. Bei anderen Temperaturen wird ein Nullpunktkorrekturwert je nach verwendeten Algorithmus (z.B. lineare Interpolation oder Fuzzy Logik) interpoliert.

Das Gerät zeigt somit ein deutlich verbessertes Betriebsverhalten bei unterschiedlichen Prozessbedingungen.

Ein weiterer besonderer Vorteil ist die Selbstlernfähigkeit des Verfahrens. So kann beispielsweise mit nur einem voreingestellten Nullpunktswert ein Messgerät ausgeliefert und in den Prozess eingebaut werden.

Immer, wenn der Betreiber einen Nullpunktabgleich durchführt, werden die entsprechenden Nullpunktswerte ermittelt und der Matrix automatisch hinzugefügt. Es wird also der entsprechende Geräte- und/oder Systemparametersatz mit dem zugeordneten neuen Nullpunkt in der Speichermatrix automatisch hinzugefügt. Im Lauf der Zeit ist die Speichermatrix gefüllt und enthält einbauortspezifisch die entsprechende Zuordnung von Parametersätzen und Nullpunkten, und sie wird laufend den sich ändernden Bedingungen automatisch angepasst. Die Dauer einer Nullpunktmessung kann vorteilhafterweise variabel gehandhabt und intelligent gesteuert werden. Denn es ist bekannt, dass die Nullpunktsbestimmung umso genauer erfolgt, je länger die Messzeit bei der Nullpunktsaufnahme ist. Bei unkritischen Systemprozessen wird diese Messzeit daher relativ kurz gehalten, bei kritischen oder schwierigen Prozessen wird sie entsprechend länger gewählt. Das System kann nun aus der Historie der aufgenommenen Nullpunktsbestimmungen selbst lernen und Kriterien entwickeln, wie lange die ideale Nullpunktsaufnahmedauer zu sein hat. Wenn beispielsweise bei den vergangenen Nullpunktsbestimmungen sich der Nullpunkt häufig geändert hat, dann deutet das darauf hin, dass es sich eher um einen kritischen Prozess handelt.

In diesem Fall würde das System dann bei künftigen Nullpunktsabgleichen eine längere Nullpunktsbestimmungszeit wählen. Die entsprechende historische Auswertung ist aufgrund der in der Matrix gespeicherten Geräte und/oder Systemparameter mit den zugehörigen geordneten Nullpunkten automatisch durchführbar. Wenn sich in der Vergangenheit bei zurückliegenden Nullpunktsbestimmungen der Nullpunkt relativ wenig geändert hat bzw. relativ konstant geblieben ist, dann kann das System daraus schließen, dass es in einem eher unkritischen Prozess eingebaut ist, und bei künftigen Nullpunktsbestimmungen wird das System folglicherweise die Zeitdauer zur Nullpunktsbestimmung eher kürzer setzen.

**Patentansprüche**

**1.** Verfahren zur Nullpunktskorrektur eines Messgerätes, insbesondere eines Durchflussmessgerätes, **dadurch ge-**

**kennzeichnet, dass**

- mehrere Nullpunktseinstellungen bei verschiedenen Geräte- und/oder Prozesszuständen durchgeführt werden,
- bei jeder dieser Nullpunktseinstellungen zusammen mit dem Null-Messwert ein Geräte- und/oder Systemparametersatz erfasst und in einem elektronischen Speicher abgelegt werden, und
- im Normalbetrieb des Messgerätes zu den jeweils aktuellen Systemund/oder Geräteparametern ein passender gespeicherter Geräteund/oder Systemparametersatz gesucht wird, so dass der diesem Parametersatz zugeordnete Null-Messwert als aktueller Nullpunktswert verwendet wird.

2. Verfahren nach Anspruch 1, **dadurch gekennzeichnet, dass** zu einem aktuellen Geräte- und/oder Systemparametersatz zwei im Speicher abgespeicherte nächstgelegene Geräte- und/oder Systemparametersätze gesucht und aus den diesen zugeordneten Null-Messwerten durch Interpolation der aktuelle Nullpunktswert ermittelt wird.

3. Verfahren nach einem der vorigen Ansprüche, **dadurch gekennzeichnet, dass** bei jeder an dem Messgerät im Betrieb durchgeführten Nullpunktskorrektur automatisch ein Geräte- und/oder Systemparametersatz mit dem diesem zugeordneten Nullpunktswert in den Speicher geschrieben werden.